# EUROPEAN PATENT APPLICATION

(11) **EP 2 008 873 A1**
(43) Date of publication of application: **31.12.2008**
(21) Application number: 07425431.9
(22) Date of filing: 13.07.2007
(51) Int. Cl.: B60R 13/00

(54) **Plate with symbol, in particular for vehicles**

(30) Priority: 27.06.2007 IT BS20070088
(71) Applicant: Lupini Targhe S.p.A., 24040 Pognano (Bergamo) (IT)
(72) Inventor: Capuzzi, Angiolino, 25020 Dello (Brescia) (IT)
(74) Representative: Crippa, Paolo Ernesto

(57) **Abstract**

The present invention relates to a plate (1) for symbol, in particular for vehicles. The plate comprises a sheet (2) that bears the symbol (E), a frame (10), provided with an opening (12) for leaving the symbol visible and a support (30) comprising a partition wall (32) and a space (34) wherein the sheet seats. The partition wall is arranged between the sheet surface and the frame for preventing reciprocal contact thereof, thus preventing corrosion phenomena.

## Description

The object of the present invention is a plate for symbol, in particular for vehicles.

Usually, the plate is arranged on the front side of the vehicle, right on top of the front bumper, so as to be clearly visible and therefore make the vehicle manufacturer's mark stand out.

Car companies have a great interest in making the symbol as much as possible entire and bright, to make the vehicle stand out in front of observers and potential buyers.

On the other hand, if looking at a car, even if it is aesthetically pleasant, an observer or a potential buyer noticed that the symbol is ruined, he/she would immediately have the impression that the manufacturer gives little attention to details and in any case the vehicle would give an impression of an object of little value.

There exist several solutions of plates for symbols for vehicles.

Such solutions generally comprise a thin sheet, on the outer surface of which there is shown the manufacturer's mark, and a frame, which surrounds the thin sheet overlapping thereon along the edge. Moreover, the plate comprises a two-faced adhesive film, arranged in contact with the inner surface of the sheet and of the frame, for gluing the plate to the vehicle.

Such solutions however have shown several disadvantages as regards keeping an entire and bright appearance, mostly due to the wear action promoted by the bad weather or by the dirt it comes in contact with.

The object of the present invention is to obtain a plate for symbol for a vehicle which should overcome the disadvantages mentioned with reference to the prior art while meeting the above requirements.

Such object is achieved by a plate obtained according to claim 1. The dependent claims describe embodiment variations.

The features and advantages of the plate according to the present invention will appear more clearly from the following description, made by way of an indicative and non-limiting example with reference to the annexed figures, wherein:

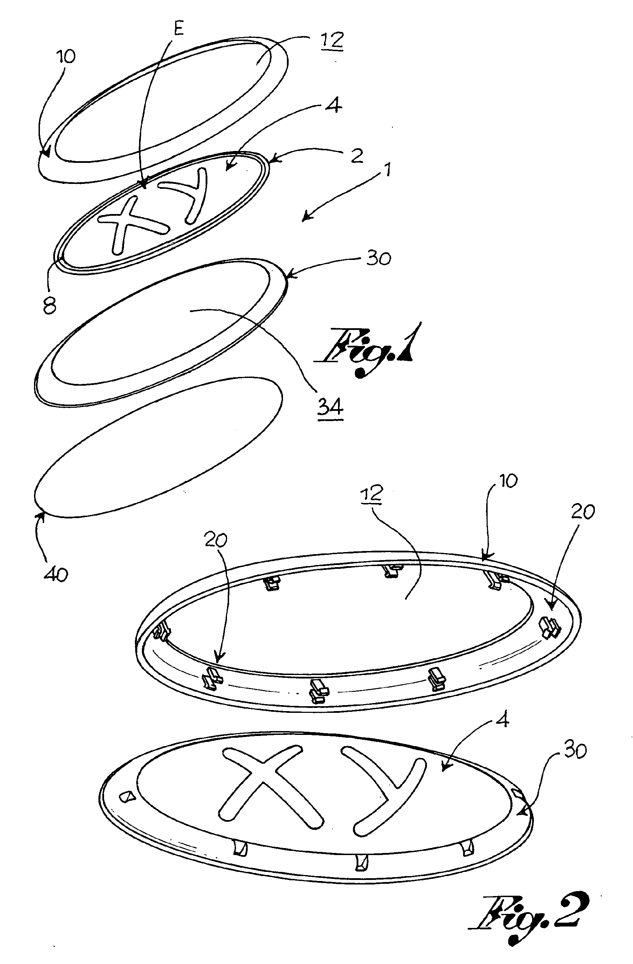

- figure 1 shows a perspective exploded view of the plate according to the present invention;

- figure 2 shows the partly assembled plate;

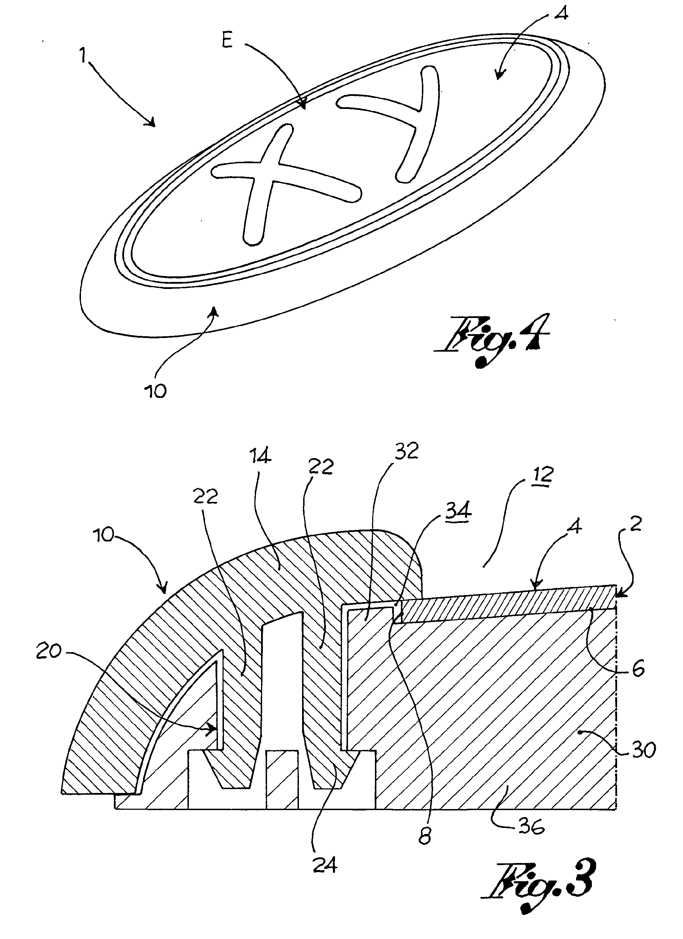

- figure 3 shows a section view of the assembled plate; and

- figure 4 shows the assembled plate.

With reference to the annexed figures, reference numeral 1 globally denotes a plate for symbol for a vehicle.

Plate 1 comprises a sheet 2 having an outer surface 4, intended for bearing symbol E, for example of a car company, an inner surface 6, and an annular surface of thickness 8 that defines the sheet thickness.

Preferably, the symbol is silkscreen printed on the outer surface of the sheet, then coated with a layer of protective coating, often transparent.

Preferably, the sheet of metal material, for example aluminium or alloys thereof, is obtained by shearing, so the metal material surfaces at least on the thickness surface.

Moreover, the plate comprises an annular frame 10, for example elliptical, provided with an opening 12 and at least partly overlapped to sheet 2, peripherally thereto, to leave the symbol visible through opening 12.

In other words, frame 10 appears like a continuous annular element, which on the back has a space wherein the sheet is seated, so that it abuts on the inner edge of the frame, leaving the symbol visible from the exterior through opening 12.

In particular, frame 10 comprises an annular covering wall 14 which overlaps to the peripheral edge of the sheet, in contact with the outer surface thereof, so that the thickness surface 8 of sheet 2 is spaced from frame 10.

Preferably, frame 10 is made of a second material, for example a mixture of polycarbonate and ABS, coated with a chromium-plating layer.

In other words, the frame exhibits a particularly bright appearance, due to the chromium plating treatment, and by virtue of this, it can be said that the surface layer thereof is of a metal material, for example chromium.

According to a preferred embodiment, moreover, frame 10 comprises a plurality of coupling projections 20, for example annularly spaced, protruding from the covering wall 14 for holding sheet 2 to the frame.

Preferably, the coupling projections 20 comprise an elongated body 22, projecting from the covering wall 14, and a protrusion 24 protruding externally from the end of body 22 for making the engagement.

Preferably, moreover, protrusion 24 is chamfered for facilitating the engagement of projection 20.

Moreover, plate 1 comprises a support 30 comprising an annular partition wall 32 that delimits a space 34 wherein sheet 2 seats; the partition wall 32 is arranged between the thickness surface 8 of sheet 2 and frame 14, for preventing reciprocal contact thereof.

Support 30 is made of an electrically insulating material, for example a mixture of polycarbonate and ABS, or of polyamide.

The partition wall 32, therefore, lays between the thickness surface 8 of sheet 2, whereon the aluminium that internally makes up the sheet often surfaces, and the surface of the covering wall 14, plated with chromium.

As is understood, in the example shown, the two metal materials of the sheet and of the frame are different from one another, and in particular the metal material of the sheet follows the metal material of the cover in the galvanic series.

As is known, the galvanic series (or electropotential series) determines the nobility of metals and semi-metals. When two metals are submerged in an electrolyte, such as water, the less noble metal will experience galvanic corrosion. The corrosion rate is determined by the electrolyte and by the potential difference.

In the case in question, therefore, if the thickness surface of the sheet (of aluminium) were in electrical or surface contact with the chromium plated layer of the frame, as it happens in the plates of the prior art, the aluminium would tend to a quick corrosion, deteriorating even visibly the sheet and therefore the appearance of the plate.

The partition wall 32 between the sheet and the frame prevents the surface contact between the thickness surface of the sheet and the frame, preventing such corrosion.

Moreover, by virtue of the coupling of the support to the frame, support 30, and in particular the partition wall 32 thereof, internally adheres to the surface of the frame, making a seal between space 34 and the interior of the frame; in this way also a connection through the electrolyte (water) between the sheet and the frame is prevented.

In particular, frame 10 engages snap-wise with support 30, by virtue of the coupling projections 20 suitable for engaging with support 30 for holding it coupled to frame 10 and for pinching sheet 2 between the covering wall 14 and support 30, keeping it into position.

According to a preferred embodiment, moreover, support 30 exhibits a flat base zone 36 annularly projecting externally, whereon the covering wall 14 of frame 10 lays.

According to a further embodiment, plate 1 comprises a two-faced adhesive film 40, arranged in contact with support 30 on the side opposite that bearing sheet 2, for example in contact with the base zone 36 of support 30, for gluing the plate to the vehicle.

Innovatively, the plate according to the present invention overcomes the disadvantages mentioned above with reference to the prior art since the corrosion of the sheet is prevented or strongly limited by the separation of the sheet itself from the frame.

Advantageously, moreover, the sheet is strongly retained to the frame, preventing undesired movements thereof.

It is clear that a man skilled in the art may make several variations to the plate described above.

For example, the frame according to an embodiment variation is made of brass or aluminium.

According to a further variation, the coupling projections are made as a single body provided with cuts for imparting elasticity.

Also such alternative embodiments are to be deemed as comprised in the scope of protection as defined by the following claims.

## Claims

1. Plate (1) with symbol, in particular for vehicles, comprising:
- a sheet (2) having an outer surface (4), intended for bearing the symbol (E), an inner surface (6), and an annular thickness surface (8) that defines the sheet thickness;
- a frame (10), provided with an opening (12) and at least partly overlapped to the sheet, peripherally thereto, to leave the symbol visible through the opening, the thickness surface of the sheet being spaced from the frame; said plate being **characterised in that** it further comprises
- a support (30) comprising an annular partition wall (32) that delimits a space (34) in the support wherein the sheet seats, said partition wall being arranged between the thickness surface of the sheet and the frame for preventing reciprocal contact thereof.

2. Plate according to claim 1, wherein the sheet is made of a first metal material surfacing at least from the thickness surface and the frame exhibits, at least on the surface, a second metal material.

3. Plate according to claim 2, wherein the first metal material is different from the second metal material.

4. Plate according to claim 3, wherein the first metal material follows the second metal material in the galvanic series.

5. Plate according to claim 4, wherein the first metal material is aluminium or an alloy thereof.

6. Plate according to claim 4 or 5, wherein the second metal material is chromium.

7. Plate according to any one of the previous claims, wherein the partition wall of the support is made of an electrically insulating material.

8. Plate according to claim 7, wherein the partition wall is made of a plastic material.

9. Plate according to claim 8, wherein the plastic material is a mixture of polycarbonate and ABS.

10. Plate according to any one of the previous claims, wherein the frame comprises
a) a covering wall (14), externally visible with plate mounted, at least partly overlapped to the sheet;
b) a plurality of coupling projections (20), protruding from the covering wall, suitable for engaging with the support for keeping it coupled to the frame and for pinching the sheet between the covering wall and the support, keeping it into position.

11. Plate according to claim 10, wherein said coupling projections comprise an elongated body (22), projecting from the covering wall, and a protrusion (24) protruding externally from the end of the body, for engaging snap-wise with the support.

12. Plate according to claim 11, wherein the protrusion is chamfered for facilitating the insertion of the projection into holes of the support.

13. Plate according to claim 10 or 11 or 12, wherein said projections are annularly spaced.

14. Plate according to any one of the previous claims wherein the outer surface of the sheet is coated with a layer of coating.

15. Plate according to any one of the previous claims, wherein the support exhibits a flat base zone (36) annularly projecting externally, whereon the frame lays.

16. Plate according to any one of the previous claims, comprising a two-faced adhesive film (40), arranged in contact with the base zone (36) of the support for gluing the plate to the vehicle.

17. Plate according to any one of the previous claims, wherein the frame exhibits elliptical shape.
